# EUROPEAN PATENT SPECIFICATION

(11) **EP 0 468 010 B1**
(45) Date of publication and mention of the grant of the patent: **05.10.1994**
(21) Application number: 91903217.7
(22) Date of filing: 11.01.1991
(51) Int. Cl.: A22B 5/20

(54) **Apparatus and method for removing a bone from a piece of meat**
Vorrichtung und Verfahren zum Entknochen von Fleischstücken
Appareil et procédé de désossement d'une pièce de viande

(30) Priority: 14.02.1990 DK 390/90
(43) Date of publication of application: 29.01.1992
(73) Proprietor: Slagteriernes Forskningsinstitut, DK-4000 Roskilde (DK)
(72) Inventor: FOLKMANN, Peter, DK-4140 Borup (DK); MAGTENGAARD, Erik, DK-4000 Roskilde (DK)
(74) Representative: Bayliss, Geoffrey Cyril
(86) International application number: DK9100009
(87) International publication number: WO9111912

(56) References cited:
- US-A- 3 483 592
- US-A- 3 486 187
- US-A- 4 488 332

## Description

The present invention relates to an apparatus designed for removing a bone from a piece of meat lying on a horizontal supporting surface, which apparatus comprises an essentially vertical driving cylinder, the piston rod of which is connected to a gripping device adapted to engage with the neck of the bone and exert an upward pull in this upon actuation of the driving cylinder, and a stop member adapted to fit tightly against the parts of the meat outside the bone during the upward pull of the gripping device in the bone.

In slaughterhouses pig carcasses are processed by means of a number of cutting and deboning operations. One of the operations consists of loosening and extracting shoulder blades from a fore end or from a split pig carcass. Depending upon the type of the meat product wanted, the method applied is either totally manual or partly mechanized.

The manual method is applied in connection with fore ends which are to be cut up into different cuts, such as neck, shank and shoulder. The partly mechanized method is applied in connection with split pig carcasses which are to be used for bacon production. In that connection it is desirable to keep the meat parts as intact as possible.

During the manual method an operator cuts free the top and the sides of the shoulder blade. Then he cuts through the joint between shoulder blade and humerus and cuts around with the knife along the edge of the joint, cutting through the sinews in and around the joint. Then the operator detaches the head of the shoulder blade from the humerus. Finally, the shoulder blade is extracted completely, e.g. by using a hand tool as described in DE-A 39 08 501. By the manual method the cartilage-like extention of the shoulder blade is mostly extracted together with the shoulder blade itself.

Traditionally, the same operator will perform all the necessary cutting and deboning operations when he works on a fore end, but there is a tendency to splitting up the work among several operators, so that one will cut free the neck bone, another cuts the neck free, a third operator cuts off the jowl, etc. An operator engaged in cutting free, loosening and extracting shoulder blades would have to work with a much larger number of fore ends per hour than before. This would cause work problems since the cutting-free operation of the head of the shoulder blade is a complicated and difficult job, and the extraction of shoulder blades is hard physical work. The work load of the operator would be unacceptably heavy.

From GB-A 1.488.051, which discloses the preambles of claims 1 and 17, an apparatus is known for partially mechanized loosening and extraction of a shoulder blade from a split pig carcass which is to be used for the production of bacon. The apparatus is provided with a vertical and a horizontal pneumatic cylinder. The piston rod of the vertical cylinder is provided with a hook which will be placed around the neck of the horizontally located shoulder blade of the carcass. By means of the cylinder the hook can exert an upward pulling power in the neck of the shoulder blade, so that the head of the shoulder blade is pulled a little upwards and therefore loosened from the joint ball of the adjacent humerus. The upward movement of the neck of the shoulder blade is stopped when the neck fits tightly against a contact surface, and the neck is firmly locked. Then the horizontal cylinder is actuated and it pulls the shoulder blade horizontally out of the pig carcass in the longitudinal direction of the shoulder blade. The apparatus is provided both with horizontal and with vertical stop plates, against which the surface of the carcass will fit tightly during the two pulling operations.

The apparatus will only be applicable if the sinews around the shoulder blade have been cut through by a previous, difficult operation. Besides, the apparatus is heavy and laborious in use. It is not very suitable for the removal of shoulder blades from fore ends, as there is a bad fixation of the fore end during the extraction and as the cartilage is not extracted together with the shoulder blade.

The objective of the present invention is to provide an apparatus which enables a mechanized removal of bones from a piece of meat, such as a shoulder blade from a fore end, which apparatus should be easier to use and should preferably be of a more simple design than the known apparatus for partially mechanized loosening and extraction of shoulder blades from split pig carcasses.

The apparatus according to the invention is characterized in that the driving cylinder is adapted to continue the upward pull in the neck of the bone until the bone has been loosened and entirely removed from the piece of meat by one operation, the gripping device and the connected piston rod of the driving cylinder having a sufficient vertical travel to remove the bone.

It has appeared that a shoulder blade may be separated from sinews and membranes which bind it to the meat and to a humerus, if any, by starting the extraction operation in a vertical direction , at right angles to the shoulder blade, and by proceeding with the extraction operation in this direction after having loosened the shoulder blade until the connections between the shoulder blade and the piece of meat has been broken.

This method of extraction is provided in the apparatus according to the invention by means of the mentioned vertical travel of the gripping device and the piston rod, so that the shoulder blade is removed from the piece of meat by a single operation of the driving cylinder, which provides a continuous, long upward pulling movement of the neck of the shoulder blade until all connections have been broken.

Preferably, it should be possible for the shoulder blade to take a more and more inclined position during the extraction, as this will facilitate the separation of the bone from the sinews and membranes of the piece of meat. The gripping device may for instance be fixed to the end of the piston rod of the driving cylinder in such a way that it may be rotated, or the hole of the gripping device for the neck of the shoulder blade can be so large enabling the neck to take up an inclined position in there.

By means of the apparatus according to the invention an operator would be able to remove a large number of shoulder blades every hour from fore ends of pigs without being strained by physically demanding movements. Only a slight manual pre-treatment of the fore ends is required for the removal of shoulder blades by means of the apparatus according to the invention, and yet only a little quantity of meat will be extracted together with the shoulder blade. The cartilage at the end of the shoulder blade would often be extracted together with the shoulder blade, so that a separate removal of the cartilage is avoided. Furthermore, the apparatus may be automated, so that the work of the operator only consists in placing a fore end correctly on the supporting surface.

The mentioned travel of the gripping device of the apparatus according to the invention depends on the type of bone in the piece of meat to be handled, and on the position of the stop surfaces in relation to the bone. The length of travel will typically be between 30 and 50 cm.

The separation of the bone from the sinews and membranes of the piece of meat would be advanced if the stop surfaces are only placed on a certain side of the line being parallel with the supporting surface and which passes through the head of the bone and which is at a right angle to the longitudinal direction of the bone, i.e. the side which is on the opposite side of the bone. Due to the flexibility of the piece of meat a type of "peeling effect" may be provided between the bone and the piece of meat when the piece of meat on the bone-side is allowed to be lifted from the supporting surface during the upward movement of the gripping device.

The apparatus according to the invention will be used most advantageously for the removal of large bones which are difficult to extract manually, i.e. it will particularly be used for the removal of bones from pig and cattle carcasses and from cuts of these. However, it may also be used in connection with the deboning of sheep and lamb as well as meat from other higher ranking animals.

The length of the bone may vary considerably from one animal to the other. Therefore, the apparatus according to the invention has preferably a length of travel which is much bigger than the average length of the type of bone in question, so that the long bones may also be removed by means of the apparatus. An embodiment of the apparatus is characterized in that the vertical travel of the gripping device and the piston rod is at least 25% preferably at least 50% longer than the average length of the bones which are to be removed.

If the above-mentioned "peeling effect" is to be utilized, the travel should also be able to allow the lifting of the piece of meat which may take place during the upward movement of the gripping device. At a maximum this may be equal to the length of the bone. A preferred embodiment of the apparatus according to the invention is characterized in that the vertical length of travel of the gripping device and the piston rod is at least twice the average length of the bones which are to be removed.

The stop member will preferably be placed upon the piece of meat before the extraction is started. That will give a considerably safer fixation of the meat parts near the bone than if these are only brought to fit tightly against the stop surfaces after the driving cylinder has been actuated, as is the case with the above-mentioned, known apparatus. It gives an easier extraction operation with fewer remains of meat on the removed bone, especially if the stop surfaces are placed in such a way that the above "peeling effect" is provided.

Therefore, the stop member is preferably suspended in a mechanism which allows the member to fit tightly against the piece of meat while it lies on the horizontal supporting surface. The suspension may be by means of a line or a spring arrangement which enables a manual establishment of contact between the stop member and the meat parts and/or bone parts of the piece of meat. It may also be a motor arrangement which may raise and lower the stop member in relation to the piece of meat.

In the apparatus according to the invention it must be possible to displace the gripping device and the stop member parallel to each other, and furthermore, it should be possible preferably to bring the stop member to fit tightly against the piece of meat before the displacement operation is started. This may be achieved in a simple way by mounting the stop member firmly on the casing of the driving cylinder and suspending the casing vertically in a movable way. In its most simple embodiment the apparatus according to the invention may therefore comprise a single cylinder.

In order to facilitate the positioning of the stop member and the gripping device in relation to the piece of meat, the stop member may be firmly guided by the movement which brings it to fit tightly against the piece of meat. By this embodiment the operator only has to place the piece of meat correctly on the horizontal supporting surface. He need not concentrate on performing a handling of the apparatus to place the stop member correctly on the piece of meat.

The firm guidance may be provided by means of two vertical rods, along which sleeves will slide that are firmly mounted on the apparatus according to the invention.

A preferred, simple embodiment of the apparatus according to the invention will provide not only a guidance for the vertical movement of the stop member, but the member may also be raised and lowered in a fully or semi-automatic way and exert a squeezing, fixating power on the piece of meat. The embodiment is characterized in that the apparatus includes another, essentially vertical driving cylinder and that the stop member is mounted on the free end of the piston rod of this driving cylinder.

By this embodiment the stop member and the gripping device may be moved up and down independently of each other. That gives great freedom to automate the work operations.

The stop member may include a horizontal plate and/or a wedge, preferably a wedge with a cutting edge.

A horizontal plate preferably provides a squeezing fixation of the piece of meat during the upward movement of the gripping device by the removal of bones. During this operation the plate may fit tightly against the meat parts opposite the bone which is to be removed, or against an adjacent bone. The plate may have the shape of the piece of meat that it is going to fit tightly against.

The purpose of a wedge is especially to cut through sinews immediately around the bone which is to be removed, and/or to separate the ends of two bones from each other by exerting a wedging/cutting effect in the joint between the bones.

Preferably, the wedge has the shape of a sector of a rotational cylinder, the diameter of which corresponds to the diameter of the head of the bone against which it supports during the removal of the bone. This gives a good guidance, especially a lateral stability of the stop member during the operation of removal.

In order to facilitate the positioning of the gripping device around the neck of the bone which is to be removed, the gripping device is preferably firmly guided during the downward movement towards the piece of meat, e.g. in the same way as mentioned above in connection with the firm guidance of the stop member. By this embodiment the only thing the operator has to do is to make sure that the piece of meat is placed correctly on the supporting surface in relation to the gripping device.

Preferentially, the gripping device is mounted on the free end of the piston rod of the driving cylinder. This enables a fully automatic gripping of the neck of the bone, as the gripping device may be designed to open when, at the downward movement of the piston rod, it comes into contact with the neck of the bone and closes around the neck when, at the continued movement of the piston rod, the points of the gripping device have passed the neck.

An embodiment of the gripping device includes two grip hooks which in a controlled way may be moved towards and away from each other by means of at least one driving device, preferably a driving cylinder. This gripping device may be used in automatic apparatuses, since the bone can be gripped and released in a controlled way.

The bottom edge of the grip hooks is preferably funnel-shaped, in which the slit between the points of the grip hooks constitute the point of the funnel. This helps guiding the gripping device and the neck of the bone into position in relation to each other during the operation of placing the gripping device round the neck. When the gripping device is pressed against the bone this may also exert a reactive force that may make the hooks of the gripping device open in an automatic way.

The grip hooks are preferably provided with inside indentations which, when the gripping device is closed, form a hole which can hold the neck of the bone. The hole is preferably larger than the cross dimension of the neck, so that the bone may take a varying inclined position during the operation of extraction. In this way the meat is detached more easily from the bone during the extraction. The same effect may also be achieved if the hole corresponds to the cross dimension of the neck and the gripping device is fastened pivotally to the free end of the piston rod, so that it is possible for the bone to take an inclined position during the removal operation.

In order to avoid overloading the neck of the shoulder blade, the contact faces of the hooks for the neck may be rounded or bevelled.

The bottom parts of the grip hooks, facing each other, are preferably of a pointed shape, and the points preferably face each other. By this design of the grip hooks they may cut into the meat behind the neck of the bone, so that remnants of meat on the neck of the bone are avoided.

An embodiment of the apparatus according to the invention, which is suitable for automation, is characterized in that the casing of the first driving cylinder and the casing of the second cylinder as well as a horizontal supporting surface for the piece of meat are mounted in a common rest, the supporting surface preferably consisting of an intermittently working conveyor belt which is designed to lead the piece of meat into position under the stop member and the gripping device, which are being operated by the driving cylinders. The positioning of the piece of meat on the conveyor belt may be performed by an operator, e.g. by means of a marker, or automatically, e.g by means of a video system.

By a driving cylinder is understood not only a pneumatic or hydraulic cylinder, but also other motor devices which may produce a similar movement of power, such as an electric motor, which may move a rod in its longitudinal direction by means of a worm gear. The invention also relates to a method for removing a bone from a piece of meat lying on a horizontal supporting surface, by which method a gripping device connected with the piston rod of an essentially vertical driving cylinder is engaged with the neck of the bone, and an upward pull is exerted in the neck by actuation of the driving cylinder, during which pull a stop member fits tightly against parts of the piece of meat outside the bone.

The method of the invention is characterized in that the gripping device and the piston rod of the driving cylinder connected with the gripping device, have a vertical travel being longer than the length of the bone which is to be removed and that the upward pull in the neck of the bone is continued until the bone has been loosened and entirely removed from the piece of meat by one operation of the driving cylinder.

A feature of a first embodiment of the method according to the invention is that the stop member is brought to fit tightly against the piece of meat before the upward pull is commenced.

A feature of a second embodiment is that the stop member comprises a wedge which is placed at the head of the bone which is to be extracted, the wedge being preferably provided with a cutting edge.

A third embodiment of the method of the invention is characterized in that the gripping device is firmly guided by the downward movement which shall bring it into engagement with the neck of the bone.

A feature of a fourth embodiment is that the gripping device comprises two grip hooks which in a controlled way may be actuated towards each other or away from each other.

The apparatus and the method according to the invention are applied in connection with the deboning of carcasses or parts of these. They may be used for operations of work by which you wish to break the joint between two bones and then to remove one of the bones. They may also be used in cases where one of the bones has already been removed manually or by machine. They may furthermore be used for the removal of a bone from its exposed end.

The invention is described in further detail in the following, with reference to the drawings, in which
Fig. 1 shows a first embodiment of an apparatus according to the invention for the removal of a shoulder blade from the fore end of a pig, as seen from the side,
Fig. 2 the same apparatus seen from the front,
Fig. 3 the gripping device, which is mounted in the apparatus,
Fig. 4 and 5 a special embodiment of a stop member to be used in the apparatus, as seen from the side and from behind,
Fig. 6 a second embodiment of an apparatus according to the invention for the removal of a shoulder blade, as seen from the side, and
Fig. 7 and 8 the stop member which is used in this embodiment, as seen from below and from behind.

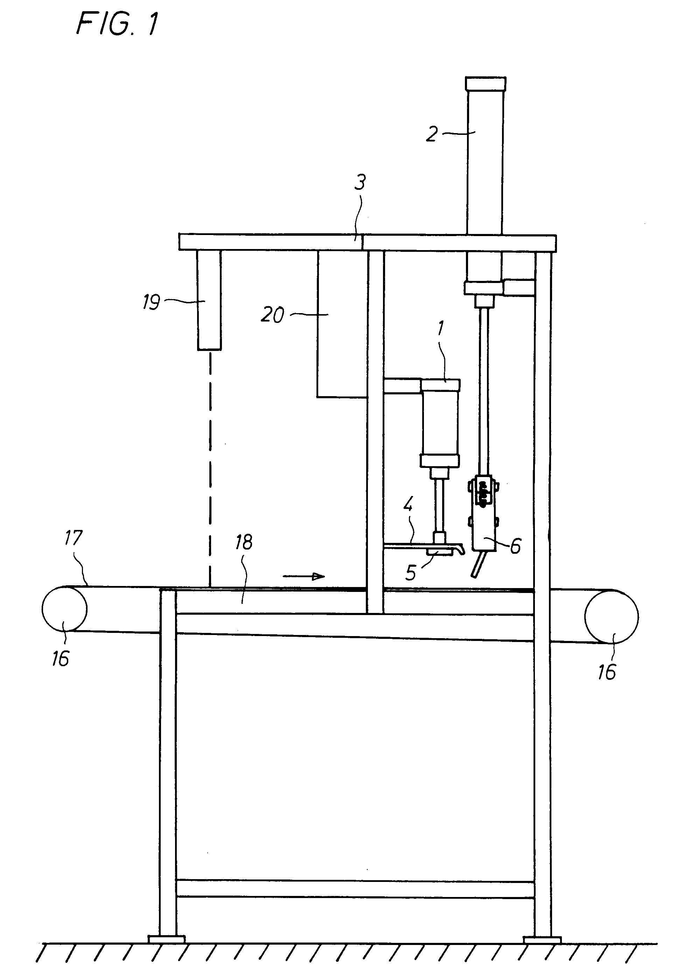

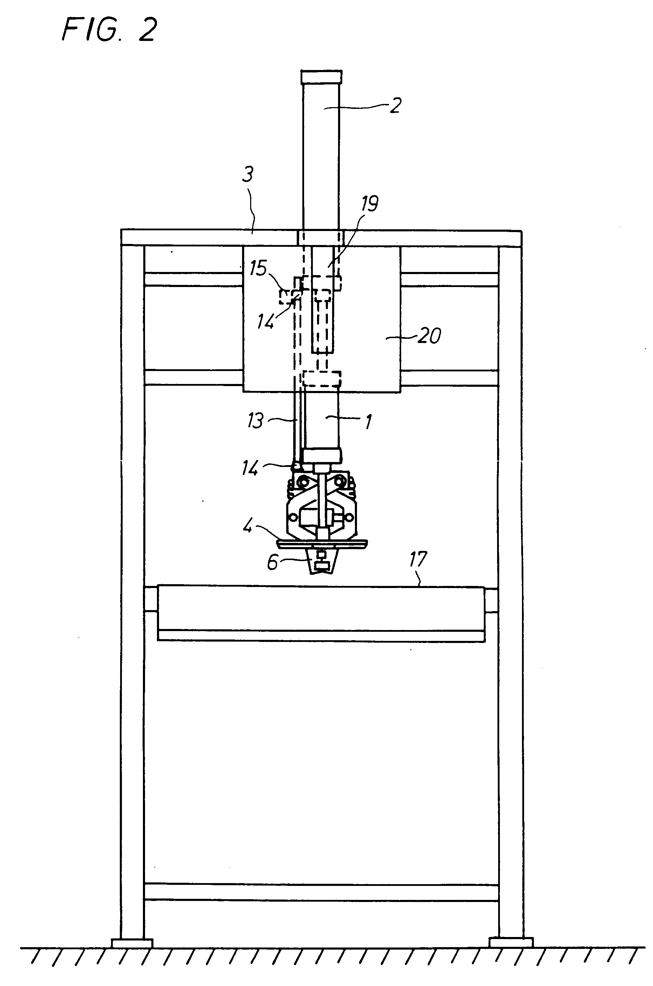

The apparatus of Fig. 1 has a first pneumatic cylinder 1 and a second pneumatic cylinder 2, the casings of which are fastened in a rest 3. At the free end of the piston rod of the cylinder 1 is mounted a horizontal plate 4 which is provided with a rotational cylindrical body 5. At the free end of the piston rod of the cylinder 2 is mounted a gripping device 6. Fig. 1 and 2 show the stop plate 4 and the gripping device 6 in their low positions.

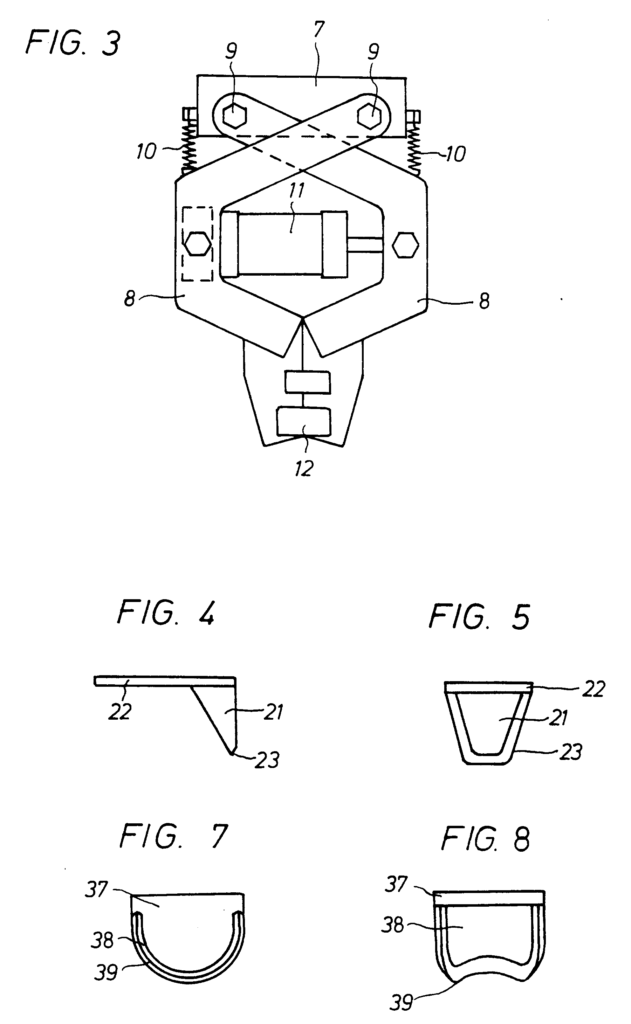

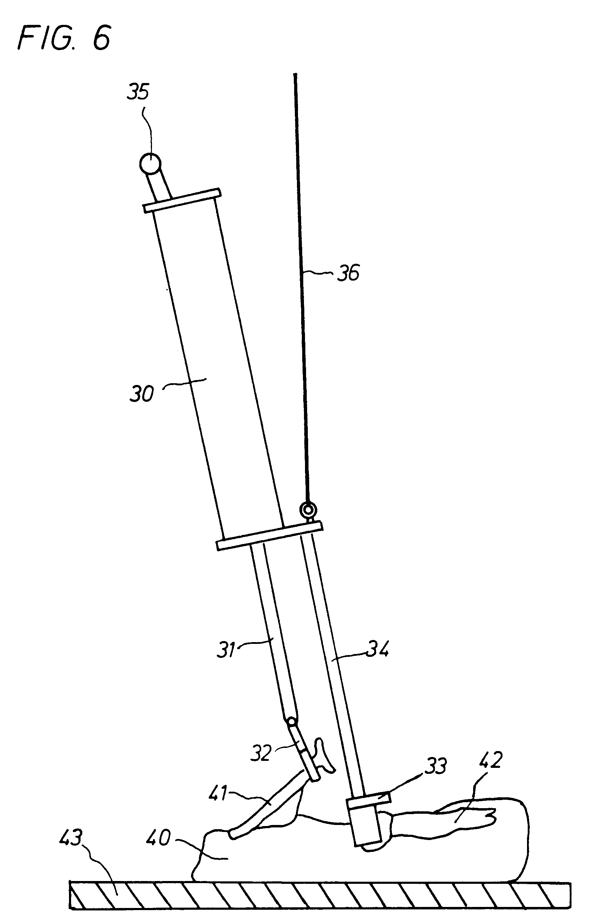

Fig 3 shows the gripping device 6 in detail. It has been fastened to the piston rod of the cylinder 2 by means of a block 7. Two grip hooks 8 have been fastened in a pivoting way to the block by means of two bolts 9 passing through the block. On the hooks are mounted two spiral springs 10 which allow small movements of the hooks around the centre line of the gripping device but which actuate them back towards the central position.

A double-acting pneumatic cylinder 11 is placed between the two hooks 8. The casing of the cylinder is fastened to the left hook, whereas the piston rod is fastened to the right hook.

Each of the hooks has an indentation which together form a square hole 12 which can surround the neck of a shoulder blade. The hole has such a vertical height that the shoulder blade may take a more and more inclined position during the upward movement of the gripping device, e.g. forming an angle of 30-60 degrees to the horizontal plane at the free end position.

Together the hooks form an inversed V, which serves to centre the gripping device and the neck of the shoulder blade in relation to each other. The points of the hooks face each other, and they are fairly sharp, so that they may cut into meat and sinews behind the neck of the shoulder blade when they are actuated towards each other by means of the cylinder 11.

On the block 7 is mounted a vertical rod 13 (Fig. 2) which makes sure that the gripping device does not rotate around the centre line of the driving cylinder. It is provided with two conical sleeves 14 the purpose of which is to actuate a control switch 15 which is designed to stop the upward and downward movements of the piston rod, respectively. Thus, the positions of the sleeves 14 on the rod determine the top and bottom positions of the gripping device 6. The distance between the sleeves corresponds to the vertical travel of the gripping device, which travel in this embodiment is 40 cm.

In the rest 3 (Fig. 1) are mounted two driving rolls 16, around which runs an endless belt 17, preferably made of rubber. A firm supporting surface 18 is placed under most of the belt.

The apparatus is provided with safety means in the form of not illustrated, vertical protective walls and two-hand switches which prevent an operator from coming into touch with the stop member and the gripping device during their movement of operation. The walls are preferably provided with windows enabling the operator to see if the work operations are running correctly.

In the rest 3 is fastened a marking device 19 which emits a narrow bundle of light in the form of a cross, indicated with a dotted line in Fig. 1. The ray of light serves to mark the correct position of a fore end on the belt 17.

The apparatus also includes a control box 20 which automatically controls the performance of the various work operations after the operator has actuated the two-hand switch.

The operation and action of the apparatus are as follows:
An operator cuts free and removes manually the humerus from the fore end of a pig. The fore end is then placed on the belt 17 with the meat side upwards, so that the shoulder blade is parallel with the direction of transport and the head is nearest to the operator. The piece of meat is placed on the belt so that the light-cross from the marking device 19 hits the centre of the head of the shoulder blade.

The operator then actuates the two-hand switch, by which the control box 20 starts an automatic working cycle. By means of the driving rolls 16 the piece of meat lying on the belt will be moved a predetermined distance to the right, so that the neck of the shoulder blade is brought to lie direct under the gripping device 6.

The cylinder 1 is actuated in a downward direction. The stop plate 4 is then moved down to fit tightly against the meat parts of the fore end, which are held firmly between the belt 17 and the plate 4 in a squeezing way. The squeezing force is biggest at the body 5, which is located under the stop plate 4.

The cylinder 2 is then actuated in a downward direction. When the front part of the grip hooks 8 touches the neck of the shoulder blade, the neck will move into the bottom of the part which has the shape of a reversed V. Here the hooks 8 are forced apart by the reactive force originating from the neck of the shoulder blade. The force is built up gradually as the cylinder 2 presses the gripping device 6 harder and harder against the neck. Finally, the neck of the shoulder blade will slip into the hole 12, and the hooks 8 will close around the neck, the points cutting into meat and sinews behind the neck of the shoulder blade.

The gripping device 6 proceeds a little bit downwards, but as soon as the top sleeve 14 on the rod 13 actuates the switch 15 the movement will stop, since the cylinder 2 is actuated to make an upward movement.

In this way the gripping device 6 will pull the head of the shoulder blade free from meat and sinews immediately around the head of the shoulder blade. By the continued upward movement of the gripping device also the neck and finally the blade itself will be pulled free of the fore end, the bone of the shoulder blade taking up a more and more inclined position. Typically, the angle of the shoulder blade to the horizontal plane will change from 0 to 60 degrees during the removal, but the terminal angle will depend upon the dimension of the hole 12 in relation to the dimension of the neck of the shoulder blade.

In many cases the plate of cartilage sitting at the end of the shoulder blade will accompany the blade, so that a subsequent manual removal is avoided.

When the bottom, conical sleeve 14 on the rod 13 hits the switch 15 the cylinder 2 will be deactuated and its upward movement stops. The cylinder 1 is reversed so that the deboned piece of meat is detached from the stop plate 4, and the stop plate is moved upward to its top position.

In the meantime, the operator has placed a new fore end in correct position on the belt 17. The driving rolls 16 are actuated, by which action the new piece of meat is moved to a position under the stop plate and the gripping device, whereas the deboned piece of meat is transported to a box or to another conveyor at the end of the belt 17. From here it is transported further on to a subsequent processing, such as derinding, cutting and trimming.

During these operations the grip hooks have been pressed against each other by means of the cylinder 11. A guiding surface is now swung into position under the gripping device with the removed shoulder blade, and the cylinder 11 is reversed so that the grip hooks 8 are moving apart and the shoulder blade falls down upon the guiding surface, which guides the shoulder blade down to a refuse bin. The guiding surface is then swung away from the gripping device. The cylinder 11 is reversed, and the points of the grip hooks are brought to fit against each other again.

The apparatus is now ready to perform a removal of the shoulder blade from the new fore end, which has been brought into position under the stop plate and the gripping device. The operator will only have to actuate the two-hand switch. By means of the apparatus it is possible to debone e.g. 600 fore ends per hour. The operator will not have to carry heavy equipment or perform any manual extraction of bones.

The embodiment of a stop member shown in Fig. 4 and 5 is provided with a wedge 21 which has been welded to a stop plate 22. The wedge has mainly the shape of a rotational cylinder, and its edges 23 are sharp. It is advantageous to use the wedge in cases when you want to cut through sinews in the immediate proximity of the head of the shoulder blade. This will facilitate the first part of the removal of the shoulder blade considerably.

The stop member may also be used in cases when the humerus has not been removed from the fore end in advance. The wedge 21 moves down into the joint between the humerus and the head of the shoulder blade. The sinews between the bones will bust or be cut through when the wedge pushes the bones apart and at the same time cuts into the sinews. When the plate 22 is brought to fit against the head of the humerus the parts of the fore end opposite the head of the shoulder blade will be fixed securely, so that the shoulder blade may be extracted by means of the gripping device 6 as described above. The round shape of the wedge serves to guide the head of the bone in relation to the wedge.

The second embodiment of an apparatus according to the invention, as shown in Fig. 6, includes a pneumatic cylinder 30 which at the free end of a piston rod 31 is provided with a hook or gripping device 32. A stop member 33 is firmly mounted to the casing of the cylinder 30 by means of a rod 34. The casing of the cylinder 30 is provided with a handle 35 to steer the apparatus. The apparatus is suspended in a line 36.

The stop member 33 consists of a plate 37 and a semi-circular wedge 38 (Fig. 7 and 8). The line 39 constitutes the cutting edge of the wedge. During the extraction of the shoulder blade the head of the humerus fits tightly against the underneath of the plate 37 and the inside of the semi-circular wedge 38.

The wedge shape at the front of the wedge 38 has the effect that the edge is disinclined to cut into the bones, but it allows that the edge cuts through the sinews which surround the joint. Furthermore, the wedge presses the two bones apart and serves as stop and guide for one of the bones. The height and the diameter of the semi-circular wedge 38 are adapted to the end of the humerus, to ensure a firm and steady stop effect during the extraction.

In Fig. 6 No. 40 indicates the fore end of a pig, 41 a shoulder blade, 42 a humerus and 43 a table. The operation and action of the hand tool are as follows:
The operator cuts the meat free at the top side of the shoulder blade and cuts along both sides of the shoulder blade to break through the periosteum. The apparatus is swung into position over the piece of meat, and the semi-circular wedge 38 of the stop member 33 is placed on the joint between the shoulder blade and the humerus. Then the operator places and locks the gripping device 32 around the neck of the shoulder blade and actuates the pneumatic cylinder 30, causing the piston rod 31 to pull the gripping device 32 upwards and away from the stop member 33. Consequently, the wedge is pressed down into the joint between the shoulder blade and the humerus, and it cuts through the sinews in and around the joint. Finally, the plate 37 of the stop member 33 will stop and fit tightly against the joint ball of the humerus. The continued pulling power has the effect that the head of the shoulder blade is pulled upwards and out of joint with the humerus. By the continued upward movement of the gripping device 32 first the neck of the shoulder blade and then the plate of the shoulder blade will loose their grip in the meat part of the fore end until the shoulder blade is perfectly free of the fore end. The cartilage of the shoulder blade will accompany the shoulder blade out, as the movement of extraction corresponds to the movement which is performed by a manual extraction of shoulder blades, i.e. in a direction by and large perpendicular to the surface of the shoulder blade.

Thus, the removal of the shoulder blade is performed in one operation, without straining the operator by physically demanding movements. Furthermore, the cartilage of the shoulder blade may be removed in the same operation. The operator may go on processing the fore end in the usual way, in order to achieve the various meat cuts.

## Claims

1. Apparatus for removing a bone from a piece of meat lying on a horizontal supporting surface (17,43), which apparatus comprising an essentially vertical driving cylinder (2,30), the piston rod of which is connected with a gripping device (6,32) adapted to engage with the neck of the bone and exert an upward pull in this upon actuation of the driving cylinder (2,30), and a stop member (4,5,33) adapted to fit tightly against the parts of the meat outside the bone during the upward pull of the gripping device (6,32) in the bone, characterized in that the driving cylinder is adapted to continue the upward pull in the neck of the bone until the bone has been loosened and entirely removed from the piece of meat by one operation, the gripping device (6,32) and the connected piston rod of the driving cylinder (2,30) having a sufficient vertical travel to remove the bone.

2. Apparatus according to Claim 1, characterized in that the vertical travel of the gripping device (6,32) and the piston rod is at least 25% preferably 50% longer than the average length of the bones which are to be removed.

3. Apparatus according to Claims 1-2, characterized in that the vertical travel of the gripping device and the piston rod is at least twice the average length of the bones which are to be removed.

4. Apparatus according to Claims 1-3, characterized in that the stop member (4,5,33) is suspended in a mechanism (1,36) which allows the stop member to fit tightly against the piece of meat while it lies on the horizontal supporting surface.

5. Apparatus according to Claim 4, **characterized** in that the stop member (33) is firmly mounted on the casing of the driving cylinder (30) and that the casing is suspended in a vertically movable way.

6. Apparatus according to Claims 4-5, **characterized** in that the stop member (4,5,33) is firmly guided at the movement which brings it to fit tightly against the piece of meat.

7. Apparatus according to Claim 6, **characterized** in that it comprises another essentially vertical driving cylinder (1) and that the stop member (4,5) is mounted on the free end of the piston rod of this driving cylinder.

8. Apparatus according to Claims 1-7, **characterized** in that the stop member (4,5,33) comprises a horizontal plate (4,22,37) and/or a wedge (23,38), preferably a wedge with a cutting edge.

9. Apparatus according to Claim 8, **characterized** in that the wedge (23,38) has the shape of a sector of a rotational cylinder whose diameter corresponds to the diameter of the bone head against which it shall support during the removal of the bone.

10. Apparatus according to Claims 1-9, **characterized** in that the gripping device (6,32) is firmly guided at the downward movement towards the piece of meat.

11. Apparatus according to Claim 10, **characterized** in that the gripping device (6,32) is mounted on the free end of the piston rod of the driving cylinder (2,30).

12. Apparatus according to Claims 1-11, **characterized** in that the gripping device (6,32) comprises two grip hooks which may be actuated in a controlled way towards each other and away from each other by means of at least one driving device, preferably a driving cylinder (11).

13. Apparatus according to Claim 12, **characterized** in that the bottom edge of the grip hooks is funnel-shaped, in which the slit between the points of the grip hooks constitutes the point of the funnel.

14. Apparatus according to Claims 12-13, **characterized** in that the lower part of the grip hooks is provided with indentations which, when the gripping device is in a closed position, form a hole (12) which can hold the neck of the bone, preferably with a larger cross dimension than the neck, so that the bone may take different inclined positions during the extraction.

15. Apparatus according to Claims 12-14, **characterized** in that the bottom parts of the grip hooks, which face each other, have a pointed shape and in that the points preferably point towards each other.

16. Apparatus according to Claims 7-15, **characterized** in that the casing of the first driving cylinder (2) and the casing of the second driving cylinder (1) and a horizontal supporting surface for the piece of meat are mounted in a common rest (3), the supporting surface preferably consisting of an intermittently working conveyor belt (17) which has been designed to lead a piece of meat into position under the stop member (4) and the gripping device (6), which are operated by the driving cylinders (1,2).

17. Method for removing a bone from a piece of meat lying on a horizontal supporting surface (17,43), by which method a gripping device (6,32) which is connected with the piston rod of an essentially vertical driving cylinder (2,30) is engaged with the neck of the bone, and an upward pull is exerted in the neck by actuation of the driving cylinder, during which pull a stop member (4,5,33) fits tightly against parts of the piece of meat outside the bone, **characterized** in that the gripping device (6,32) and the piston rod of the driving cylinder (2,30), connected with the gripping device, have a vertical travel which is longer than the length of the bone which is to be removed and that the upward pull in the neck of the bone is continued until the bone has been loosened and entirely removed from the piece of meat by one operation of the driving cylinder.

18. Method according to Claim 17, **characterized** in that the stop member (4,5,33) is brought to fit tightly against the piece of meat before the upward pull is commenced.

19. Method according to Claim 18, **characterized** in that the stop member comprises a wedge (23,38) which is placed at the head of the bone which is to be extracted, the wedge being preferably provided with a cutting edge.

20. Method according to Claims 17-19, **characterized** in that the gripping device (6,32) is firmly guided by the downward movement which brings it into engagement with the neck of the bone.

21. Method according to Claims 17-20, **characterized** in that the gripping device comprises two grip hooks (8) which in a controlled way may be actuated towards each other or away from each other.

## Patentansprüche

1. Vorrichtung zum Entbeinen von einem auf einer horizontalen Auflagefläche (17,43) liegenden Fleischstück, bestehend aus einem im wesentlichen vertikalen Antriebszylinder (2, 30), dessen Kolbenstange mit einem Greifer (6, 32) verbunden ist, der am Knochenhals ansetzt und, bei Betätigung des Antriebszylinders (2,30), auf diesen mit einer nach oben gerichteten Zugkraft einwirkt, und einem Halteteil (4,5,33), das sich bei der Aufwärtsbewegung des am Knochen ansetzenden Greifers (6,32) fest an die außerhalb des Knochens befindlichen Fleischteile anlegt, **gekennzeichnet** dadurch, daß der Antriebszylinder der Fortsetzung der aufwärts gerichteten Zugkraft am Knochenhals dient, bis der Knochen in einem Arbeitsgang gelöst und vollständig aus dem Fleischstück entfernt ist, wobei für den Greifer (6,32) und die verbundene Kolbenstange des Antriebszylinders (2,30) ein ausreichender vertikaler Hubweg zum Entfernen des Knochens zur Verfügung steht.

2. Vorrichtung gemäß Anspruch 1, **gekennzeichnet** dadurch, daß der vertikale Hubweg des Greifers (6,32) und der Kolbenstange mindestens um 25 %, vorzugsweise 50 %, größer ist als die durchschnittliche Länge der zu entfernenden Knochen.

3. Vorrichtung gemäß Ansprüchen 1-2, **gekennzeichnet** dadurch, daß der vertikale Hubweg des Greifers und der Kolbenstange mindestens das Zweifache der durchschnittlichen Länge der zu entfernenden Knochen beträgt.

4. Vorrichtung gemäß Ansprüchen 1-3, **gekennzeichnet** dadurch, daß das Halteteil (4,5,33) in einen Mechanismus (1,36) eingehängt ist, welcher gewährleistet, daß das Halteteil fest an dem Fleischstück anliegen kann, während sich dieses auf der horizontalen Auflagefläche befindet.

5. Vorrichtung gemäß Anspruch 4, **gekennzeichnet** dadurch, daß das Halteteil (33) an dem Gehäuse des Antriebszylinders (30) fest montiert ist und daß das Gehäuse so eingehängt ist, daß es vertikal beweglich ist.

6. Vorrichtung gemäß Ansprüchen 4-5, **gekennzeichnet** dadurch, daß das Halteteil (4, 5, 33) in dem Moment, in dem es fest an dem Fleischstück anliegt, sicher und stabil geführt wird.

7. Vorrichtung gemäß Anspruch 6, **gekennzeichnet** dadurch, daß sie einen weiteren im wesentlichen vertikalen Antriebszylinder (1) aufweist und daß das Halteteil (4,5) an dem freien Ende der Kolbenstange des Antriebszylinders befestigt ist.

8. Vorrichtung gemäß Ansprüchen 1-7, **gekennzeichnet** dadurch, daß das Halteteil (4,5,33) eine horizontale Platte (4,22,37) und/oder einen Feststellkeil (23,38), vorzugsweise einen Keil mit einer Schneidkante, aufweist.

9. Vorrichtung gemäß Anspruch 8, **gekennzeichnet** dadurch, daß der Feststellkeil (23,38) die Form eines Abschnitts eines Rotationszylinders hat, dessen Durchmesser dem Durchmesser des Knochenkopfes entspricht, gegen den er während des Entbeinens drückt.

10. Vorrichtung gemäß Ansprüchen 1-9, **gekennzeichnet** dadurch, daß der Greifer (6,32) während der Abwärtsbewegung in Richtung Fleischstück sicher und stabil geführt wird.

11. Vorrichtung gemäß Anspruch 10, **gekennzeichnet** dadurch, daß der Greifer (6,32) an dem freien Ende der Kolbenstange des Antriebszylinders (2,30) befestigt ist.

12. Vorrichtung gemäß Ansprüchen 1-11, **gekennzeichnet** dadurch, daß der Greifer (6, 32) zwei Greifhaken besitzt, die durch mindestens ein Antriebsteil, vorzugsweise einen Antriebszylinder (11), steuerbar aufeinander zu und voneinander weg bewegbar sind.

13. Vorrichtung gemäß Anspruch 12, **gekennzeichnet** dadurch, daß die Unterseite der Greifhaken trichterförmig ausgeformt ist und daß der Schlitz zwischen den Enden der Greifhaken die Spitze des Trichters bildet.

14. Vorrichtung gemäß Ansprüchen 12-13, **gekennzeichnet** dadurch, daß der untere Teil der Greifhaken mit einer Zahnung versehen ist, die bei geschlossener Position des Greifers eine Öffnung (12) freigibt, mit der der Knochenhals festgehalten werden kann und die vorzugsweise eine größere Querausdehnung als der Knochenhals besitzt, so daß der Knochen bei der Extraktion unterschiedliche, in verschiedene Richtungen geneigte Positionen einnehmen kann.

15. Vorrichtung gemäß Ansprüchen 12-14, **gekennzeichnet** dadurch, daß die Unterteile der sich gegenüberstehenden Greifhaken spitzzulaufend sind und daß die Enden vorzugsweise aufeinander zeigen.

16. Vorrichtung gemäß Ansprüchen 7-15, **gekennzeichnet** dadurch, daß das Gehäuse des ersten Antriebszylinders (2) und das Gehäuse des zweiten Antriebszylinders (1) sowie eine horizontale Auflagefläche für das Fleischstück in eine gemeinsame Halterung (3) montiert sind, wobei die Auflagefläche vorzugsweise aus einem schubweise arbeitenden Transportband (17) besteht, dessen Aufgabe es ist, das Fleischstück unter dem Halteteil (4) und dem Greifer (6), die von den Antriebszylindern (1,2) angetrieben sind, zu positionieren.

17. Verfahren zum Entbeinen eines auf einer horizontalen Auflagefläche (17, 43) befindlichen Fleischstückes, bei dem ein Greifer (6,32), der mit der Kolbenstange eines im wesentlichen vertikalen Antriebszylinders (2,30) verbunden ist, den Knochenhals erfaßt und bei dem durch Betätigung des Antriebszylinders eine aufwärts gerichtete Zugkraft auf den Hals einwirkt, während der ein Halteteil (4,5,33) fest an den Teilen des Fleischstückes außerhalb des Knochens anliegt, **gekennzeichnet** dadurch, daß der Greifer (6,32) und die mit dem Greifer verbundene Kolbenstange des Antriebszylinders (2,30) über einen vertikalen Hubweg verfügen, der größer ist als die Länge des zu entfernenden Knochens sowie dadurch, daß die aufwärts gerichtete Zugkraft am Knochenhals fortgesetzt wird, bis der Knochen in einem Arbeitsgang des Antriebszylinders gelöst und aus dem Fleischstück vollständig entfernt ist.

18. Verfahren gemäß Anspruch 17, **gekennzeichnet** dadurch, daß das Halteteil (4,5,33) vor Beginn der aufwärts gerichteten Zugkraft fest an dem Fleischstück aufliegt.

19. Verfahren gemäß Anspruch 18, **gekennzeichnet** dadurch, daß das Halteteil einen Haltekeil (23,38) umfaßt, der am Kopf des zu entfernenden Knochens plaziert wird, wobei der Keil vorzugsweise eine Schneidkante aufweist.

20. Verfahren gemäß Ansprüchen 17-19, **gekennzeichnet** dadurch, daß der Greifer (6,32) durch die Abwärtsbewegung, durch die er am Knochenhals ansetzt, sicher und stabil geführt wird.

21. Verfahren gemäß Ansprüchen 17-20, **gekennzeichnet** dadurch, daß der Greifer zwei Greifhaken (8) aufweist, die steuerbar aufeinander zu und voneinander weg bewegbar sind.

## Revendications

1. Appareil de désossement d'une pièce de boucherie posée sur une surface support horizontale (17, 43), l'appareil comportant un vérin d'entraînement (2, 30) essentiellement vertical dont la tige de piston est reliée à un dispositif de saisie (6, 32) adapté pour se mettre en prise avec le collet d'un os et y exercer une traction vers le haut lors de l'actionnement du vérin d'entraînement (2, 30), et un élément de blocage (4, 5, 33) adapté pour s'ajuster de façon serrée contre les parties de la pièce de boucherie extérieure à l'os au cours de la traction vers le haut du dispositif de saisie (6, 32) qui s'exerce sur l'os, caractérisé en ce que le vérin d'entraînement est adapté pour poursuivre la traction vers le haut sur le collet de l'os jusqu'à ce que l'os ait été détaché et entièrement extrait de la pièce de boucherie en une seule opération, le dispositif de saisie (6, 32) et la tige du piston du vérin d'entraînement (2, 30) qui y est reliée ayant une course verticale suffisante pour extraire l'os.

2. Appareil selon la revendication 1, caractérisé en ce que la course verticale du dispositif de saisie (6, 32) et de la tige du piston est au moins 25% et de préférence 50% plus longue que la longueur moyenne des os devant être extraits.

3. Appareil selon les revendications 1 et 2, caractérisé en ce que la course verticale du dispositif de saisie et de la tige du piston est au moins deux fois plus longue que la longueur moyenne des os devant être extraits.

4. Appareil selon les revendications 1 à 3, caractérisé en ce que l'élément de blocage (4, 5, 33) est suspendu à un mécanisme (1, 36) qui permet à l'élément de blocage de s'ajuster de façon serrée contre la pièce de boucherie lorsque celle-ci repose sur la surface support horizontale.

5. Appareil selon la revendication 4, caractérisé en ce que l'élément de blocage (33) est monté fermement sur le carter du vérin d'entraînement (30) et en ce que le carter est suspendu de façon mobile verticalement.

6. Appareil selon les revendications 4 et 5, caractérisé en ce que l'élément de blocage (4, 5, 33) est guidé fermement lors du déplacement qui l'amène à s'ajuster de façon serrée contre la pièce de boucherie.

7. Appareil selon la revendication 6, caractérisé en ce qu'il comporte un autre vérin d'entraînement (1) essentiellement vertical et en ce que l'élément de blocage (4, 5) est monté à l'extrémité libre de la tige du piston de ce vérin d'entraînement.

8. Appareil selon les revendications 1 à 7, caractérisé en ce que l'élément de blocage (4, 5, 33) comporte une plaque horizontale (4, 22, 37) et/ou un mors (23, 38), de préférence un mors ayant une arête coupante.

9. Appareil selon la revendication 8, caractérisé en ce que le mors (23, 38) a la forme d'un secteur d'un cylindre rotatif dont le diamètre correspond au diamètre de la tête de l'os contre laquelle il doit être supporté au cours de l'extraction de l'os.

10. Appareil selon les revendications 1 à 9, caractérisé en ce que le dispositif de saisie (6, 32) est guidé fermement dans son mouvement descendant vers la pièce de boucherie.

11. Appareil selon la revendication 10, caractérisé en ce que le dispositif de saisie (6, 32) est monté à l'extrémité libre de la tige du piston du vérin d'entraînement (2, 30).

12. Appareil selon les revendications 1 à 11, caractérisé en ce que le dispositif de saisie (6, 32) comporte deux crochets de saisie pouvant être actionnés de façon commandée et rapprochés ou éloignés l'un de l'autre au moyen d'au moins un dispositif d'entraînement, comprenant de préférence un vérin d'entraînement (11).

13. Appareil selon la revendication 12, caractérisé en ce que l'arête inférieure des crochets de saisie est en forme d'entonnoir et en ce que la fente située entre les pointes des crochets de saisie constitue le bec de l'entonnoir.

14. Appareil selon les revendications 12 et 13, caractérisé en ce que la partie inférieure des crochets de saisie comporte des indentations et, lorsque le dispositif de saisie est en position fermée, constitue un orifice 12 qui peut maintenir la gorge de l'os et dont les dimensions de la section droite sont de préférence supérieures aux dimensions de la gorge, de telle sorte que l'os peut prendre diverses positions inclinées au cours de l'extraction.

15. Appareil selon les revendications 12 à 14, caractérisé en ce que les parties inférieures des crochets de saisie qui se font face l'une à l'autre ont des formes pointues et en ce que de préférence les pointes se font face l'une à l'autre.

16. Appareil selon les revendications 7 à 15, caractérisé en ce que le carter du premier vérin d'entraînement (2) et le carter du deuxième vérin d'entraînement (1) et une surface support horizontale destinée à la pièce de boucherie, sont montés sur un support commun (3), la surface support étant constituée de préférence par un tapis convoyeur (17) à fonctionnement intermittent prévu pour conduire la pièce de boucherie en position au-dessous de l'élément de blocage (4) et du dispositif de saisie (6) qui sont actionnés par les vérin d'entraînement (1, 2).

17. Procédé de désossement d'une pièce de boucherie posée sur une surface support horizontale (17, 43), qui comporte les étapes qui consistent à mettre en prise un dispositif de saisie (6, 32) relié à la tige du piston d'un cylindre d'entraînement (2, 30) essentiellement vertical avec le collet d'un os et à exercer une traction vers le haut sur le collet par l'actionnement du vérin d'entraînement, au cours de ladite traction un élément de blocage (4, 5, 33) s'ajustant de façon serrée contre les parties de la pièce de boucherie extérieures à l'os, caractérisé en ce que le dispositif de saisie (6, 32) et la tige du piston du vérin d'entraînement (2, 30) reliée au dispositif de saisie ont une course verticale supérieure à la longueur de l'os devant être extrait et en ce que la traction vers le haut qui s'exerce sur le collet de l'os est poursuivie jusqu'à ce que l'os ait été détaché et entièrement extrait de la pièce de boucherie en une seule opération du vérin d'entraînement.

18. Procédé selon la revendication 17, caractérisé en ce que l'élément de blocage (4, 5, 33) est amené à s'ajuster de façon serrée contre la pièce de boucherie avant le début de la traction vers le haut.

19. Procédé selon la revendication 18, caractérisé en ce que l'élément de blocage comporte un mors (23, 38) placé sur la tête de l'os devant être extrait, le mors étant de préférence muni d'une arête coupante.

20. Procédé selon les revendications 17 à 19, caractérisé en ce que le dispositif de saisie (6, 32) est guidé fermement par le déplacement vers le bas qui l'amène en prise avec le collet de l'os.

21. Procédé selon les revendications 17 à 20, caractérisé en ce que le dispositif de saisie comporte deux crochets (8) de saisie qui de façon commandée peuvent être actionnés pour se rapprocher ou s'éloigner l'un de l'autre.
